# EUROPEAN PATENT SPECIFICATION

(11) **EP 4 167 681 B1**
(45) Date of publication and mention of the grant of the patent: **07.08.2024**
(21) Application number: 20942699.8
(22) Date of filing: 03.07.2020
(51) Int. Cl.: H04W 80/00, H04W 28/18, H04L 9/40, H04L 69/24

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 19.04.2023
(73) Proprietor: Huawei Technologies Co., Ltd., Longgang District, Shenzhen, Guangdong 518129 (CN)
(72) Inventor: CHANG, Junren, Shenzhen, Guangdong 518129 (CN); HAN, Lei, Shenzhen, Guangdong 518129 (CN); WANG, Lingping, Shenzhen, Guangdong 518129 (CN); FENG, Shulan, Shenzhen, Guangdong 518129 (CN); LIU, Jianghua, Shenzhen, Guangdong 518129 (CN)
(74) Representative: Gill Jennings & Every LLP
(86) International application number: PCT/CN2020/100240
(87) International publication number: WO 2022/000494

(56) References cited:
- WO-A1-2017/142175
- CN-A- 102 647 759
- CN-A- 103 068 070
- CN-A- 103 188 820
- CN-A- 106 550 413
- CN-A- 108 337 695
- US-A1- 2010 177 629
- US-A1- 2014 187 224

## Description

### TECHNICAL FIELD

This application relates to the field of wireless communication technologies, and in particular, to a communication method and apparatus.

### BACKGROUND

With continuous development of wireless communication technologies, addition of more new features, and repair of vulnerabilities, various versions of wireless communication technology protocols are being upgraded and improved, for example, from originally released commercial protocol versions (release 8, R8) and R9, to related protocol versions R10, R11, R12, and the like of an advanced long term evolution (LTE-A) communication technology, to related protocol versions R15, R16, R17, and the like of a fifth generation (5G) communication technology.

Because of a variety of protocol versions, for an actual deployed base station and core network device, base stations that support different protocol versions may simultaneously exist. For example, a base station 1 and a base station 2 that are actually deployed may support different protocol versions. Core network devices that support different protocol versions may also exist. For example, a core network device 1 and a core network device 2 that are actually deployed may support different protocol versions. In this case, communication between a terminal device and a network device may be faulty because the terminal device is incompatible with the network device (for example, a base station or a core network device).

US2010177629A1 relates to protocol fallback technique for wireless data communications. CN103188820A relates to method and device for automatically resetting network version of mobile communication system. US2014187224A1 relates to protocol version negotiation method, mobile terminal, base station and communications system.

### SUMMARY

This application provides a communication method and apparatus, so as to quickly resolve a communication problem caused by incompatibility between a terminal device and a network device.

The invention has been defined in the independent claims. Further specific technical features have been defined in the dependent claims.

### BRIEF DESCRIPTION OF DRAWINGS

FIG. 1 is a schematic diagram of a network architecture applicable to an implementation of this application;
FIG. 2a is a schematic diagram of a CU-DU separation architecture according to an implementation of this application;
FIG. 2b is a schematic diagram of another CU-DU separation architecture according to an implementation of this application;
FIG. 3 is a schematic flowchart corresponding to a communication method according to Implementation 1 of this application;
FIG. 4 is a schematic flowchart corresponding to a communication method according to Implementation 2 of this application;
FIG. 5 is a schematic flowchart corresponding to a communication method according to Implementation 3 of this application;
FIG. 6 is a schematic flowchart corresponding to a communication method according to Implementation 4 of this application;
FIG. 7 is a schematic flowchart corresponding to a communication method according to Implementation 5 of this application;
FIG. 8 is a schematic flowchart corresponding to a communication method according to Implementation 6 of this application;
FIG. 9 is a schematic flowchart corresponding to a communication method according to Implementation 7 of this application;
FIG. 10 is a possible exemplary block diagram of an apparatus involved in an implementation of this application;
FIG. 11 is a schematic diagram of a structure of a terminal device according to an implementation of this application;
FIG. 12 is a schematic diagram of a structure of an access network device according to an implementation of this application; and
FIG. 13 is a schematic diagram of a structure of a core network device according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

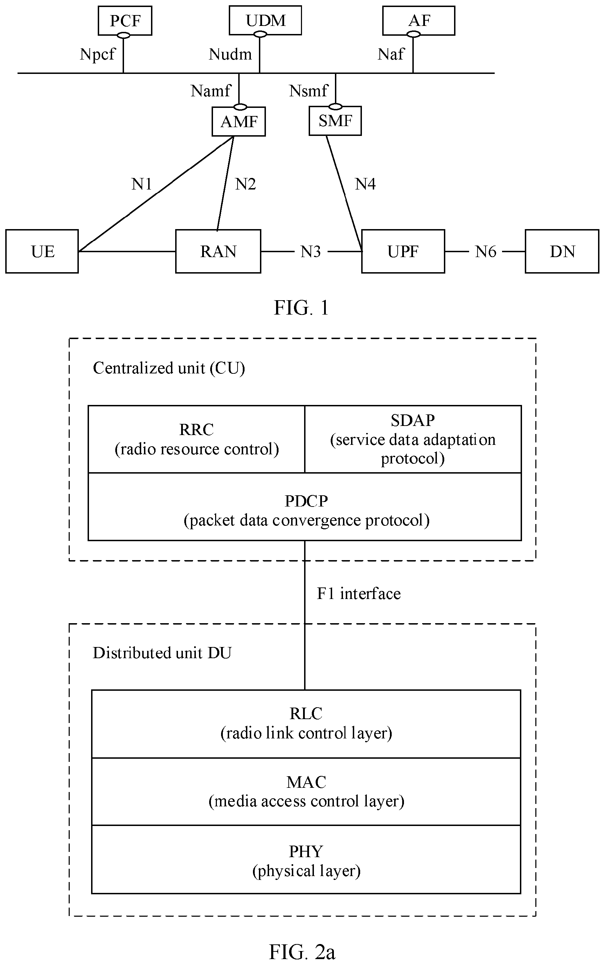

FIG. 1 is a schematic diagram of a network architecture applicable to an implementation of this application. As shown in FIG. 1, a terminal device may access a wireless network, so as to obtain a service of an external network (for example, a data network (DN)) by using the wireless network, or communicate with another device by using the wireless network, for example, may communicate with another terminal device. The wireless network includes a radio access network (RAN) and a core network (CN). The RAN may also be referred to as an access network (AN), and is configured to enable a terminal device to access the wireless network. The CN is configured to manage the terminal device and provide a gateway for communicating with a DN.

The following separately describes in detail the terminal device, the RAN, and the CN in FIG. 1.

### I. Terminal device

The terminal device may also be referred to as user equipment (UE) that includes a device that provides voice and/or data connectivity to a user, and for example, may include a handheld device with a wireless connection function or a processing device connected to a wireless modem. The terminal device may communicate with a core network through a radio access network (RAN), and exchange voice and/or data with the RAN. The terminal device may include a wireless terminal device, a mobile terminal device, a device-to-device communication (D2D) terminal device, a vehicle to everything (V2X) terminal device, a machine-to-machine/machine-type communications (M2M/MTC) terminal device, an internet of things (IoT) terminal device, a subscriber unit, a subscriber station, a mobile station, a remote station, an access point (AP), a remote terminal, an access terminal, a user terminal, a user agent, a user device, or the like, for example, may include a mobile phone (or referred to as a "cellular" phone), a computer with a mobile terminal device, a portable, pocket-sized, handheld, or computer built-in mobile apparatus, or the like. For example, the terminal device may be a device such as a personal communication service (PCS) phone, a cordless telephone set, a session initiation protocol (SIP) phone, a wireless local loop (WLL) station, or a personal digital assistant (PDA). The terminal device alternatively includes a limited device, for example, a device having low power consumption, a device having a limited storage capability, or a device having a limited computing capability. For example, the terminal device includes an information sensing device such as a barcode, a radio frequency identification (RFID), a sensor, a global positioning system (GPS), or a laser scanner.

In this implementation of this application, an apparatus configured to implement a function of the terminal device may be a terminal device, or may be an apparatus that can support the terminal device in implementing the function, for example, a chip system or a combination device or a component that can implement the function of the terminal device. The apparatus may be installed in the terminal device. In this implementation of this application, the chip system may include a chip, or may include a chip and another discrete component. In technical solutions provided in this implementation of this application, that an apparatus configured to implement a function of the terminal device is a terminal device is used as an example to describe the technical solutions provided in this implementation of this application.

### II. RAN

The RAN may include one or more RAN devices, and an interface between the RAN device and the terminal device may be a Uu interface (or referred to as an air interface). Certainly, in future communication, names of these interfaces may not change, or may be replaced with other names, which is not limited in this application.

The RAN device is a node or a device that enables the terminal device to access a wireless network, and the RAN device may also be referred to as an access network device or a base station. For example, the access network device includes but is not limited to: a generation NodeB (gNB) in a 5G communication system, an evolved NodeB (eNB), a radio network controller (RNC), a NodeB (NB), a base station controller (BSC), a base transceiver station (BTS), a home evolved NodeB (HeNB or HNB), a baseband unit (BBU), a transmitting and receiving point (TRP), a transmitting point (TP), a mobile switching center, or the like.

In this implementation of this application, an apparatus configured to implement a function of the access network device may be an access network device, or may be an apparatus that can support the access network device in implementing the function, for example, a chip system or a combination device or a component that can implement the function of the access network device. The apparatus may be installed in the access network device. In technical solutions provided in an implementation of this application, an example in which the apparatus configured to implement the function of the access network device is an access network device is used to describe the technical solutions provided in the implementation of this application.

For example, communication between the RAN device and the terminal device follows a specific protocol layer structure. For example, a control plane protocol layer structure may include a radio resource control (RRC) layer, a packet data convergence protocol (PDCP) layer, a radio link control (RLC) layer, a media access control (MAC) layer, and a physical layer. A user plane protocol layer structure may include a PDCP layer, an RLC layer, a MAC layer, and a physical layer. In a possible implementation, a service data adaptation protocol (SDAP) layer may be further included above the PDCP layer.

In an example, the RAN device may include one or more centralized units (CU) and one or more distributed units (DU), and a plurality of DUs may be centrally controlled by one CU. As an example, an interface between the CU and the DU may be referred to as an F1 interface, a control plane (CP) interface may be F1-C, and a user plane (UP) interface may be F1-U. The CU and the DU may be divided based on a protocol layer of a wireless network. For example, as shown in FIG. 2a, functions of the PDCP layer and a protocol layer above are disposed in the CU, and functions of a protocol layer below the PDCP layer (for example, an RLC layer and a MAC layer) are disposed in the DU.

It may be understood that, the foregoing division on processing functions of the CU and the DU based on a protocol layer is merely an example, or may be performed in another manner. For example, functions of a protocol layer above the PDCP layer are disposed in the CU, and functions of the PDCP layer and the protocol layer below the PDCP layer are disposed in the DU. For example, the CU or the DU may be divided into functions that have more protocol layers, or the CU or the DU may be divided into some processing functions that have a protocol layer. In one design, some functions of the RLC layer and functions of a protocol layer above the RLC layer are set in the CU, and remaining functions of the RLC layer and functions of a protocol layer below the RLC layer are set in the DU. In another design, functions of the CU or the DU may be further divided based on a service type or another system requirement, for example, may be divided based on a time delay. A function that needs to meet a time delay requirement in terms of processing time is set in the DU, and a function that does not need to meet the time delay requirement is set in the CU. In another design, the CU may alternatively have one or more functions of a core network. For example, the CU may be disposed on a network side for convenient centralized management. The DU may have a plurality of radio frequency functions, or the radio frequency functions may be set remotely. This is not limited in implementations of this application.

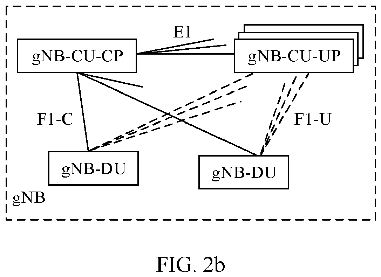

For example, a function of the CU may be implemented by one entity, or may be implemented by different entities. For example, as shown in FIG. 2b, the function of the CU may be further divided, that is, a control plane and a user plane are separated and implemented by using different entities, which are respectively a control plane CU entity (that is, a CU-CP entity) and a user plane CU entity (that is, a CU-UP entity). The CU-CP entity and the CU-UP entity may be coupled to the DU to jointly implement a function of the RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

It should be noted that in the foregoing architectures shown in FIG. 2a and FIG. 2b, signaling generated by the CU may be sent to the terminal device by using the DU, or signaling generated by the terminal device may be sent to the CU by using the DU. The DU may directly encapsulate the signaling by using a protocol layer without parsing the signaling, and then transparently transmit the signaling to the terminal device or the CU. If the following implementation involves transmission of this type of signaling between the DU and the terminal device, in this case, sending or receiving signaling by the DU includes this scenario. For example, signaling at the RRC or PDCP layer is finally processed as signaling at the physical layer and sent to the terminal device, or is converted from signaling received from the physical layer. In this architecture, the signaling at the RRC or PDCP layer may be considered as being sent by the DU, or sent by the DU and a radio frequency apparatus.

### III. CN

The CN may include one or more core network devices or core network elements. A 5G communication system is used as an example. The CN may include an access and mobility management function (AMF) network element, a session management function (SMF) network element, a user plane function (UPF) network element, a policy control function (PCF) network element, a unified data management (UDM) network element, an application function (AF) network element, and the like.

The AMF network element is a control plane network element provided by an operator network, and is responsible for access control and mobility management of a terminal device accessing the operator network, for example, which includes functions such as managing a mobility state, allocating a temporary identity of a user, and authenticating and authorizing a user.

The SMF network element is a control plane network element provided by the operator network, and is responsible for managing a PDU session of the terminal device. The PDU session is a channel configured to transmit a PDU, and the terminal device and a DN need to transmit the PDU to each other by using the PDU session. Establishment, maintaining, deleting, and the like of the PDU session are responsible by the SMF network element. The SMF network element includes session-related functions such as session management (such as session establishment, modification and release, including tunnel maintenance between the UPF and the RAN), selection and control of the UPF network element, service and session continuity (SSC) mode selection, and roaming.

The UPF network element is a gateway provided by an operator, and is a gateway for the operator network to communicate with the DN. The UPF network element includes user plane-related functions such as data packet routing and transmission, packet detection, quality of service (QoS) processing, legal interception, uplink packet detection, and downlink data packet storage.

The PCF network element has a control plane function provided by the operator, and is configured to provide a PDU session policy for the SMF network element. Policies may include a charging-related policy, a QoS-related policy, an authorization-related policy, and the like.

The UDM network element is a control plane network element provided by the operator, and is responsible for storing information such as a subscriber permanent identifier (SUPI) and subscription data of a subscribed user in the operator network.

The AF network element is a functional network element that provides various services, and can interact with a core network through another network element and can interact with a policy management framework to perform policy management.

In addition, although not shown, the CN may further include another possible network element, for example, a network exposure function (NEF) network element, and a unified data repository (UDR) network element.

In this implementation of this application, an apparatus configured to implement a function of a core network device may be a core network device, or may be an apparatus that can support the core network device in implementing the function, for example, a chip system or a combination device or a component that can implement the function of the core network device. The apparatus may be installed in the core network device. In technical solutions provided in an implementation of this application, an example in which the apparatus configured to implement the function of the core network device is a core network device is used to describe the technical solutions provided in the implementation of this application.

It should be noted that the access network device and the core network device in this implementation of this application may be collectively referred to as a network device, that is, the network device may include the access network device and/or the core network device.

In FIG. 1, Npcf, Nudm, Naf, Namf, Nsmf, N1, N2, N3, N4, and N6 are interface sequence numbers. For meanings of these interface sequence numbers, refer to the meanings defined in related standard protocols, which is not limited herein.

It may be understood that a 5G communication system is used as an example in FIG. 1. Solutions in implementations of this application may be further applied to another possible communication system, for example, the 6th generation (6G) communication system in the future. The foregoing network element or function may be a network element in a hardware device, or may be a software function running on dedicated hardware, or a virtualized function instantiated on a platform (for example, a cloud platform). Optionally, the foregoing network element or function may be implemented by one device, or may be implemented by a plurality of devices together, or may be a function module in one device. This is not specifically limited in this implementation of this application.

In the foregoing network architecture shown in FIG. 1, in a communication process between a terminal device and a network device, the network device is usually used as a center, that is, the network device controls configuration of most or all parameters. Generally, after a problem occurs in communication between the terminal device and the network device, a manufacturer of the terminal device usually relies on traversing various possible problems to locate and resolve the problem, which is time consuming and inefficient.

In actual problem processing, the manufacturer of the terminal device finds that a considerable part of problems are caused by incompatibility between the terminal device and the network device. There may be various cases in which the terminal device is incompatible with the network device. For example, in a possible case, a protocol version supported by the terminal device is different from a protocol supported by the access network device, and/or a protocol version supported by the terminal device is different from a protocol supported by the core network device. For example, the terminal device is normally accessed at an LTE access network device side. However, after the LTE access network device sends a secondary base station addition request message to a 5G access network device, the 5G access network device returns a reject message, and a cause value carried in the reject message is that an air interface resource is unavailable. After analysis, it is found that the protocol version supported by the terminal device is higher than a protocol version supported by the 5G access network device, which causes a failure in parsing capability information of the terminal device by the 5G access network device, thereby causing an access failure of the terminal device.

In another possible case, capability information reported by the terminal device does not match capability information cached by the access network device, and/or capability information reported by the terminal device does not match capability information cached by the core network device. For example, after the terminal device reports a measurement report to the access network device, the access network device does not deliver a handover command message, which causes a handover failure. After analysis, it is found that air interface capability information reported by the terminal device to the access network device is 348 bytes, and a container of the access network device can store capability information of a maximum of 300 bytes. Therefore, the access network device fails to parse the capability information of the terminal device, and cannot deliver a handover command.

However, when a problem such as an access failure occurs in a process of communication between the terminal device and the access network device, or when a problem such as a registration failure occurs in a process of communication between the terminal device and the core network device, even if the access failure or the registration failure is caused by incompatibility between the terminal device and the access network device or the core network device, it is often impossible to predict whether it is caused by the incompatibility, and therefore, a large amount of time needs to be spent in reproducing, locating, or testing the problem. For example, the terminal device determines a problem location and range through attempting to reduce a capability. However, when independently reducing a capability, the terminal device does not have any reference information, and generally only an empirical attempt can be performed. Thus, solving a problem of incompatibility between the terminal device and the network device is extremely inefficient.

Based on this, an implementation of this application provides a communication method, so as to quickly resolve a communication problem caused by incompatibility between the terminal device and the network device. For example, the communication method provided in this implementation of this application may include: A network device sends indication information to a terminal device, where the indication information is used to indicate to fall back a capability of the terminal device to a first protocol version, so that the terminal device can perform a capability fallback based on the indication information. In this way, because the network device can explicitly indicate to fall back the capability of the terminal device to the first protocol version, the terminal device can specially reduce the capability, so as to quickly resolve the communication problem caused by incompatibility between the terminal device and the network device.

The following describes in detail the communication method provided in an implementation of this application.

### Implementation 1

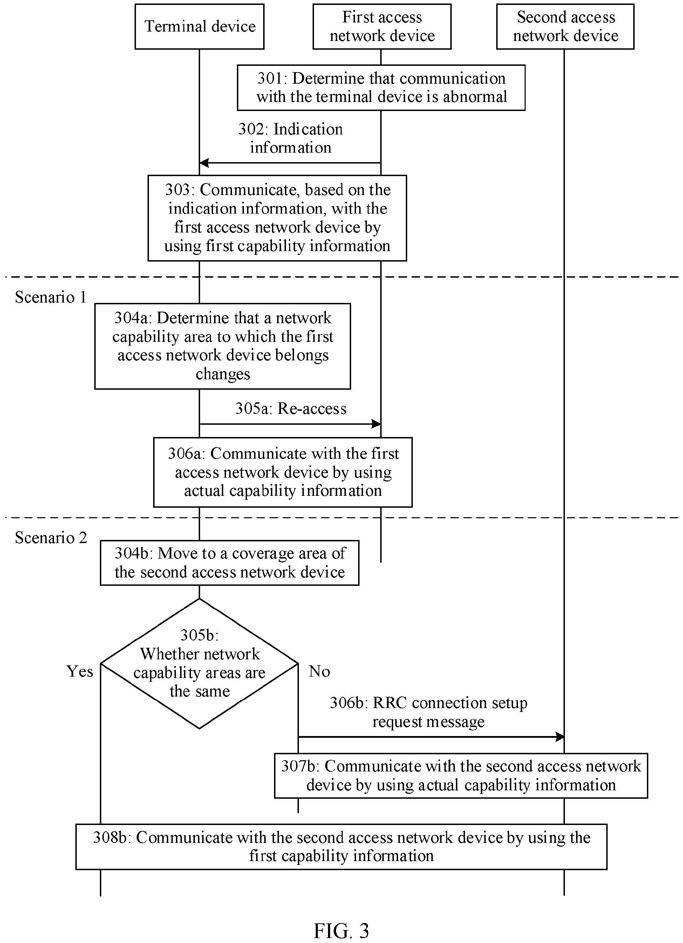

FIG. 3 is a schematic flowchart corresponding to a communication method according to Implementation 1 of this application. As shown in FIG. 3, the method may include:
Step 301: A first access network device determines that communication with a terminal device is abnormal.

Herein, that the first access network device determines that the communication with the terminal device is abnormal may include a plurality of possible cases, such as the following case 1 and/or case 2.
Case 1: The first access network device receives a first message from the terminal device, and determines that the first message cannot be identified or determines that the first message fails to be parsed. The first message may include at least one of the following: an RRC connection setup request message, an RRC connection setup resume request message, and an RRC connection reestablishment request message.
Case 2: The first access network device receives second capability information from the terminal device, and determines that the second capability information fails to be parsed. That is, before step 301, the terminal device may establish an RRC connection to the first access network device, and send the second capability information to the first access network device. The first access network device receives the second capability information, and may determine that the communication with the terminal device is abnormal if parsing fails.

Step 302: The first access network device sends indication information to the terminal device, where the indication information is used to indicate to fall back a capability of the terminal device to a first protocol version. Correspondingly, the terminal device may receive the indication information from the first access network device.

Herein, the first access network device may send the indication information to the terminal device in a plurality of manners. For example, for the foregoing case 1, the first access network device may send the indication information to the terminal device by using an RRC connection setup reject message. For another example, for the foregoing case 2, the first access network device may send the indication information to the terminal device by using an RRC connection release message. It may be understood that the first access network device may alternatively send the indication information by using another possible message, which is not specifically limited.

In an example, the indication information may include first protocol version information, and protocol version information in this implementation of this application may include an identifier of a protocol version. Alternatively, a fallback protocol version may be predefined as the first protocol version. In this case, the indication information may no longer include the first protocol version information.

In this implementation of this application, the first access network device may further send a fallback cause value to the terminal device, and the fallback cause value is used to indicate at least one of the following: The first message sent by the terminal device cannot be identified; one or more information elements in the first message cannot be identified; the second capability information sent by the terminal device fails to be parsed; the capability of the terminal device is excessively large; an abstract syntax notation one (ASN.1) information element (IE) or field fails to be parsed; an ASN.1 extended information element or field fails to be parsed; an ASN.1 critical extended information element or field fails to be parsed; and an ASN.1 non-critical extended information element or field fails to be parsed. The fallback cause value and the indication information may be carried in a same message, or may be carried in different messages, which is not specifically limited.

The protocol version described in this implementation of this application may also be referred to as a standard version, for example, a release of a 3rd Generation Partnership Project (3GPP) standard, such as R15 and R16, or may be a version of a 3GPP standard, such as v15.1.0 and v162.0.

It should be noted that the first access network device may alternatively implicitly indicate to fall back the capability of the terminal device to the first protocol version. For example, the first access network device may send a fallback cause value (no longer send the indication information) to the terminal device, so that after receiving the fallback cause value, the terminal device may determine that the capability needs to fall back to the first protocol version.

Step 303: The terminal device communicates, based on the indication information, with the first access network device by using first capability information, where a protocol version corresponding to the first capability information is lower than or equal to the first protocol version.

In an example, the terminal device may send the first capability information to the first access network device, and further communicate with the first access network device by using the first capability information. In another example, the terminal device may not send the first capability information to the first access network device. In this case, the first access network device may obtain the first capability information of the terminal device from a core network device (for example, an AMF network element), so that the terminal device can communicate with the first access network device by using the first capability information.

For example, after step 303, another possible step may be further included. The following is described with reference to Scenario 1 and Scenario 2.

### Scenario 1:

After step 303, the method may further include:
Step 304a: The terminal device determines that a network capability area (NCA) to which the first access network device belongs changes.

Herein, the network capability area to which the first access network device belongs may include at least one access network device. The at least one access network device has a same capability (for example, a protocol version supported by the at least one access network device is the same). The at least one access network device includes the first access network device. In an example, the network capability area may include one or more track areas (TA), or may include one or more RAN areas, and the RAN area is an area for a terminal device in an inactive state.

For example, the first access network device may broadcast, by using a system message, information of the network capability area to which the first access network device belongs, so that the terminal device can receive the information of the network capability area to which the first access network device belongs. After the information of the network capability area to which the first access network device belongs changes, the first access network device may send an updated system message, where the updated system message includes changed information of the network capability area, and after receiving the updated system message, the terminal device may determine that the network capability area to which the first access network device belongs changes.

The information of the network capability area to which the first access network device belongs may be sent by the core network device to the first access network device, that is, the core network device may manage information of network capability areas to which a plurality of access network devices belong, and send information of a network capability area to which each access network device belongs to a corresponding access network device. Alternatively, the information of the network capability area to which the first access network device belongs may be determined through negotiation between the first access network device and another access network device. Alternatively, the information of the network capability area to which the first access network device belongs may be configured in a preconfigured manner in the first access network device. This is not limited in this implementation of this application.

The information of the network capability area may include an identifier of the network capability area (NCA ID), and the NCA ID may be information used to identify the network capability area, for example, may be a number of the network capability area or other possible information, which is not specifically limited. In this implementation of this application, information that can be used to distinguish between different network capability areas may be understood as an identifier of a network capability area.

Step 305a: The terminal device re-accesses the first access network device, for example, the terminal device may send an RRC connection setup request message to the first access network device.

For example, the RRC connection setup request message may include a cause value, and the cause value is used to indicate that a network capability area changes, so that the first access network device can learn that the terminal device initiates re-access because the network capability area changes. Optionally, the RRC connection setup request message may further include an identifier of the network capability area before changing.

Step 306a: The terminal device communicates with the first access network device by using actual capability information.

In an example, the terminal device may send the actual capability information of the terminal device to the first access network device. Further, after receiving the actual capability information of the terminal device, the first access network device may send the actual capability information of the terminal device to the core network device.

It can be learned that in the foregoing scenario 1, after the network capability area to which the first access network device belongs changes, the terminal device may no longer communicate with the first access network device by using the first capability information, but may re-access the first access network device and communicate with the first access network device by using the actual capability information, so that the terminal device can obtain a better service. In addition, after the terminal device communicates with the first access network device by using the actual capability information, if the first access network device determines that communication is abnormal, indication information may be sent to the terminal device again, so as to indicate the terminal device to fall back to the first protocol version or may indicate the terminal device to fall back to another possible protocol version.

### Scenario 2:

Step 304b: The terminal device moves from a coverage area of the first access network device to a coverage area of a second access network device.

Step 305b: The terminal device determines whether a network capability area to which the second access network device belongs is the same as a network capability area to which the first access network device belongs; and if not, performs step 306b; or if yes, performs step 308b.

Herein, the second access network device may broadcast, by using a system message, information of the network capability area to which the second access network device belongs, so that the terminal device can receive the information of the network capability area to which the second access network device belongs. Further, the terminal device may determine, based on the information of the network capability area to which the second access network device belongs and previously received information of the network capability area to which the first access network device belongs, whether the network capability area to which the second access network device belongs is the same as the network capability area to which the first access network device belongs.

It should be noted that if the information of the network capability area to which the first access network device belongs once changed, the information of the network capability area to which the first access network device belongs herein may refer to the latest information of the network capability area to which the first access network device belongs.

Step 306b: The terminal device sends an RRC connection setup request message to the second access network device, so as to establish an RRC connection to the second access network device.

For example, the RRC connection setup request message may include a cause value, and the cause value is used to indicate that a network capability area changes. Optionally, the RRC connection setup request message may further include an identifier of the network capability area to which the first access network device belongs.

In an example, after determining that the network capability area to which the second access network device belongs is different from the network capability area to which the first access network device belongs, the terminal device may further determine whether a service requirement exists. The terminal device may send an RRC connection setup request message to the second access network device if a service requirement exists, or may not send an RRC connection setup request message to the second access network device if a service requirement does not exist.

In another possible example, the terminal device may alternatively first determine whether a service requirement exists, and if a service requirement exists, determine whether the network capability area to which the second access network device belongs is the same as the network capability area to which the first access network device belongs, so as to perform a corresponding operation based on a determining result.

Step 307b: The terminal device communicates with the second access network device by using actual capability information.

In an example, the terminal device may send the actual capability information of the terminal device to the second access network device. Alternatively, the terminal device may not send the actual capability information of the terminal device to the second access network device. In this case, the second access network device may obtain the actual capability information of the terminal device from the core network device.

For step 307b, as a possible alternative solution, a network capability corresponding to a network capability area may be predefined, for example, a network capability area 1 corresponds to a network capability 1 (for example, protocol versions supported by an access network device in the network capability area 1 are all R15), and a network capability area 2 corresponds to a network capability 2 (for example, protocol versions supported by an access network device in the network capability area 2 are all R16).

In this case, if the terminal device determines that a network capability corresponding to the network capability area to which the second access network device belongs is less than a network capability corresponding to the network capability area to which the first access network device belongs, the terminal device may communicate with the second access network device by using third capability information. For example, the terminal device may send the third capability information to the second access network device, where a protocol version corresponding to the third capability information is less than a protocol version corresponding to the first capability information. Alternatively, if the terminal device determines that a network capability corresponding to the network capability area to which the second access network device belongs is greater than a network capability corresponding to the network capability area to which the first access network device belongs, the terminal device may communicate with the second access network device by using fourth capability information. For example, the terminal device may send the fourth capability information to the second access network device, where a protocol version corresponding to the fourth capability information is greater than a protocol version corresponding to the first capability information.

For example, if the terminal device determines that an identifier of the network capability area to which the second access network device belongs is less than an identifier of the network capability area to which the first access network device belongs, it indicates that the network capability corresponding to the network capability area to which the second access network device belongs is less than the network capability corresponding to the network capability area to which the first access network device belongs. If the terminal device determines that the identifier of the network capability area to which the second access network device belongs is greater than the identifier of the network capability area to which the first access network device belongs, it indicates that the network capability corresponding to the network capability area to which the second access network device belongs is greater than the network capability corresponding to the network capability area to which the first access network device belongs.

Step 308b: The terminal device communicates with the second access network device by using the first capability information.

For example, the terminal device may send the first capability information to the second access network device. Alternatively, the terminal device may not send the first capability information to the second access network device. In this case, the second access network device may obtain the first capability information from the core network device.

In an example, after determining that the network capability area to which the second access network device belongs is the same as the network capability area to which the first access network device belongs, the terminal device may further determine whether a service requirement exists. If a service requirement exists, the terminal device may communicate with the second access network device by using the first capability information.

It can be learned that in the foregoing scenario 2, after the terminal device moves from the coverage area of the first access network device to the coverage area of the second access network device, the terminal device may determine whether the network capability area to which the second access network device belongs is the same as the network capability area to which the first access network device belongs, and if yes, may communicate with the second access network device by using the first capability information, so as to avoid an unnecessary capability fallback operation.

It should be noted that the first capability information, the second capability information, the third capability information, and the fourth capability information in Implementation 1 may all refer to access layer capability information. The access layer capability information may refer to capability information that needs to be exchanged between the terminal device and the access network device.

By using the method in Implementation 1, after determining that communication is abnormal, the access network device can explicitly indicate the terminal device to fall back the capability to the first protocol version, so as to assist the terminal device in quickly and efficiently locating a problem, prevent the terminal device from performing an aimless capability reduction attempt, and help quickly resolve a communication problem caused by incompatibility between the terminal device and the access network device.

### Implementation 2

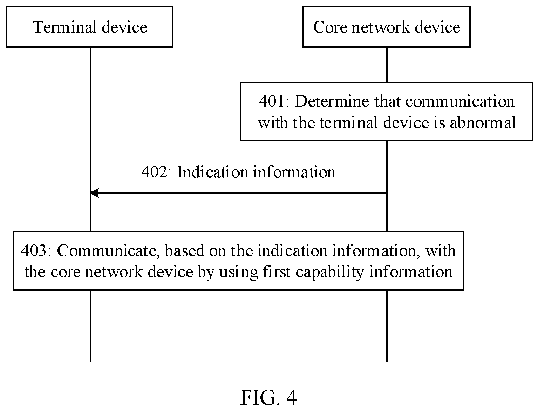

FIG. 4 is a schematic flowchart corresponding to a communication method according to Implementation 2 of this application. As shown in FIG. 4, the method may include:
Step 401: A core network device determines that communication with a terminal device is abnormal.

Herein, that the core network device determines that the communication with the terminal device is abnormal may include a plurality of possible cases, for example, the core network device determines that second capability information sent by the terminal device fails to be parsed. That is, before step 401, the terminal device may send the second capability information to the core network device, for example, may send the second capability information to the core network device by using a registration request message. Correspondingly, the core network device receives the second capability information, and may determine that the communication with the terminal device is abnormal if parsing fails.

Step 402: The core network device sends indication information to the terminal device, where the indication information is used to indicate to fall back a capability of the terminal device to a first protocol version. Correspondingly, the terminal device may receive the indication information from the core network device.

Herein, the core network device may send the indication information to the terminal device in a plurality of manners. For example, the core network device may send the indication information to the terminal device by using a registration reject message.

In an example, the indication information may include first protocol version information. Alternatively, a fallback protocol version may be predefined as a first protocol version. In this case, the indication information may no longer include the first protocol version information.

In this implementation of this application, the core network device may further send a fallback cause value to the terminal device, where the fallback cause value is used to indicate at least one of the following: The second capability information sent by the terminal device fails to be parsed; the capability of the terminal device is excessively large; an ASN.1 information element or field fails to be parsed; and an ASN.1 extended information element or field fails to be parsed. The fallback cause value and the indication information may be carried in a same message, or may be carried in different messages, which is not specifically limited.

Step 403: The terminal device communicates, based on the indication information, with the core network device by using first capability information, where a protocol version corresponding to the first capability information is lower than or equal to the first protocol version.

For example, the terminal device may send the first capability information to the core network device.

It should be noted that both the first capability information and the second capability information in Implementation 1 may refer to network layer capability information. The network layer capability information may refer to capability information that needs to be exchanged between the terminal device and a device in a core network.

By using the method in Implementation 2, after determining that communication is abnormal, the core network device can explicitly indicate the terminal device to fall back the capability to the first protocol version, so as to assist the terminal device in quickly and efficiently locating a problem, prevent the terminal device from performing an aimless capability reduction attempt, and help quickly resolve a communication problem caused by incompatibility between the terminal device and the core network device.

### Implementation 3

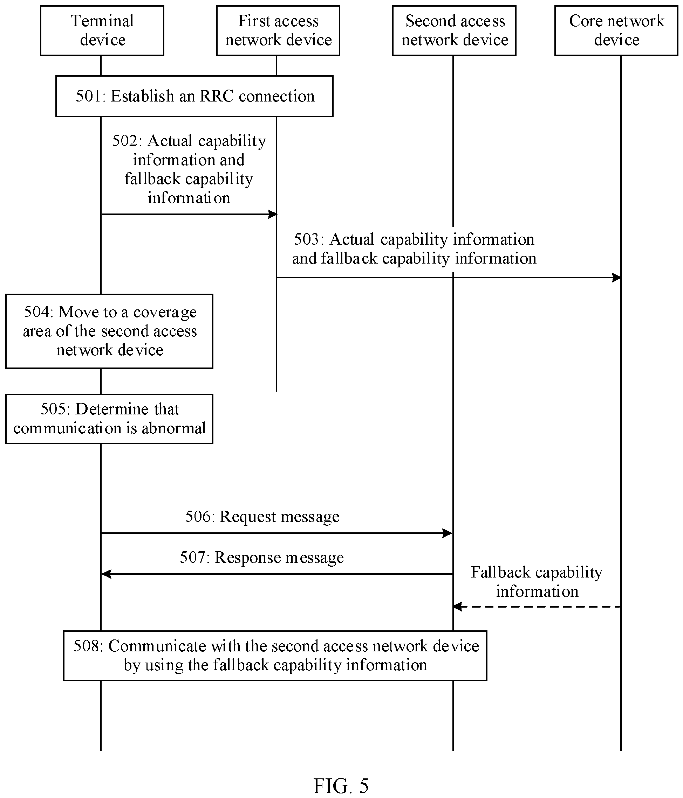

FIG. 5 is a schematic flowchart corresponding to a communication method according to Implementation 3 of this application. As shown in FIG. 5, the method may include:
Step 501: A terminal device establishes an RRC connection to a first access network device.

Step 502: The terminal device sends actual capability information and fallback capability information of the terminal device to the first access network device. Correspondingly, the first access network device may receive and store the actual capability information and the fallback capability information of the terminal device.

For example, the first access network device may be an access network device initially accessed by the terminal device. A protocol version supported by the first access network device may be greater than or equal to a protocol version supported by the terminal device. In this case, the terminal device can normally access the first access network device, and communicate with the first access network device by using the actual capability information of the terminal device.

Herein, the fallback capability information of the terminal device may refer to capability information corresponding to a fallback protocol version. In an example, the fallback protocol version may be a protocol version that the terminal device can fall back preset based on a specific rule or standard, for example, the fallback protocol version may be R15 orv16.1.0. Alternatively, the fallback protocol version may be a standard version with most stable compatibility specified by a standard organization, such as v15.4.0 or v162.0.

It should be noted that, in another possible example, the access network device (for example, the first access network device or a second access network device in the following) may broadcast fallback protocol version information by using a system message. Therefore, after receiving the system message, the terminal device may determine the fallback capability information based on the fallback protocol version information in the system message. In this case, fallback protocol version information broadcasted by different access network devices may be the same or may be different, which is not specifically limited. If the fallback protocol version information broadcasted by the different access network devices is different, in step 503, the terminal device may no longer send the fallback capability information to the first access network device, and in step 509, the terminal device may send the fallback capability information to the second access network device.

Step 503: The first access network device sends the actual capability information and the fallback capability information of the terminal device to a core network device. Correspondingly, the core network device may receive and store the actual capability information and the fallback capability information of the terminal device.

Step 504: The terminal device moves from a coverage area of the first access network device to a coverage area of the second access network device.

Step 505: The terminal device determines that communication is abnormal.

Herein, there may be a plurality of cases in which the terminal device determines that the communication is abnormal, for example, the following cases 1 to 3.
Case 1: The terminal device determines that N times of access failures occur, where the N is greater than or equal to a first threshold. For example, after the terminal device sends an RRC connection setup request message to the second access network device, if an RRC connection setup reject message sent by the second access network device is received, it may be understood as one access failure.
Case 2: The terminal device determines that M times of registration failures occur, where the M is greater than or equal to a second threshold. For example, after the terminal device sends a registration request message to the core network device by using the second access network device, if a registration reject message sent by the core network device is received, it may be understood as one registration failure.
Case 3: The terminal device determines that K times of system information parsing failures occur, where the K is greater than or equal to a third threshold.

For example, the first threshold, the second threshold, and the third threshold may be predefined. A specific value may be set with reference to an actual requirement.

Step 506: The terminal device sends a request message to the second access network device, where the request message is used to request to communicate with the second access network device by using the fallback capability information. Correspondingly, the second access network device may receive the request message.

Step 507: The second access network device sends a response message for the request message to the terminal device, where the response message is used to indicate that the terminal device may communicate with the second access network device by using the fallback capability information.

Step 508: The terminal device communicates with the second access network device by using the fallback capability information.

In an example, the terminal device may send the fallback capability information to the second access network device. Alternatively, the terminal device may not send the fallback capability information to the second access network device. In this case, the second access network device may obtain the fallback capability information of the terminal device from the core network device.

By using the method in Implementation 3, after determining that the communication is abnormal, the terminal device may communicate with the access network device by using the fallback capability information, so as to prevent the terminal device from performing an aimless capability reduction attempt, so that a communication problem caused by incompatibility between the terminal device and a network device can be quickly resolved.

Based on Implementation 1 to Implementation 3, the following describes a procedure of the communication method provided in implementations of this application with reference to some specific implementations (for example, Implementation 4 to Implementation 6).

### Implementation 4

In Implementation 4, a possible procedure is described based on Implementation 1.

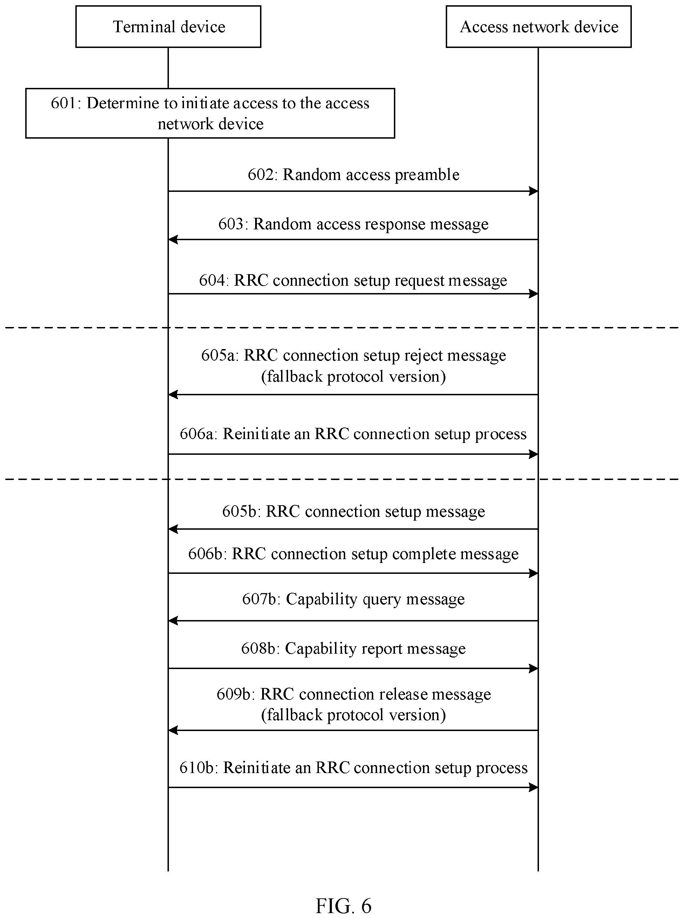

FIG. 6 is a schematic flowchart corresponding to a communication method according to Implementation 4 of this application. As shown in FIG. 6, the method may include:
Step 601: A terminal device determines, based on a service requirement, to initiate access to an access network device, to establish an RRC connection to the access network device.

Step 602: The terminal device sends a random access preamble to the access network device.

Step 603: After receiving the random access preamble sent by the terminal device, the access network device sends a random access response message to the terminal device.

Step 604: The terminal device sends an RRC connection setup request message to the access network device.

Further, if the access network device rejects the RRC connection setup request from the terminal device, step 605a and step 606a may be performed. If the access network device accepts the RRC connection setup request from the terminal device, step 605b till step 610b may be performed.

Step 605a: The access network device sends an RRC connection setup reject message to the terminal device, and indicates, in the RRC connection setup reject message, the terminal device to perform a capability fallback.

For example, the access network device may determine to reject the RRC connection setup request from the terminal device in a case in which the RRC connection setup request message sent by the terminal device cannot be identified, or another compatibility problem exists, and specify a fallback protocol version, such as a first protocol version, in the RRC connection setup reject message.

Step 606a: After receiving the RRC connection setup reject message, the terminal device reinitiates an RRC connection setup process based on the fallback protocol version indicated in the RRC connection setup reject message.

Step 605b: The access network device sends an RRC connection setup message to the terminal device.

Step 606b: The terminal device sends an RRC connection setup complete message to the access network device.

Step 607b: The access network device determines to perform a capability query of the terminal device, and sends a capability query message to the terminal device.

Step 608b: The terminal device sends a capability report message to the access network device, and reports capability information of the terminal device.

Step 609b: The access network device sends an RRC connection release message to the terminal device, and indicates fallback protocol version information in the RRC connection release message.

For example, the access network device may determine, because of a capability parsing failure, that a compatibility problem occurs, or determine to release the terminal device because a capability of the terminal device is excessively large and exceeds a processing capability of the access network device; and may send the RRC connection release message to the terminal device.

Step 610b: After receiving the RRC connection release message, the terminal device reinitiates an RRC connection setup process based on a fallback protocol version indicated in the RRC connection release message.

In addition, after step 606a and step 610b, if an RRC connection is successfully set up, the terminal device may report capability information based on the fallback protocol version in subsequent capability reporting. Further, the access network device receives the capability information based on the fallback protocol version, and may send the capability information based on the fallback protocol version to the core network device.

### Implementation 5

In Implementation 5, a possible procedure is described based on Implementation 2.

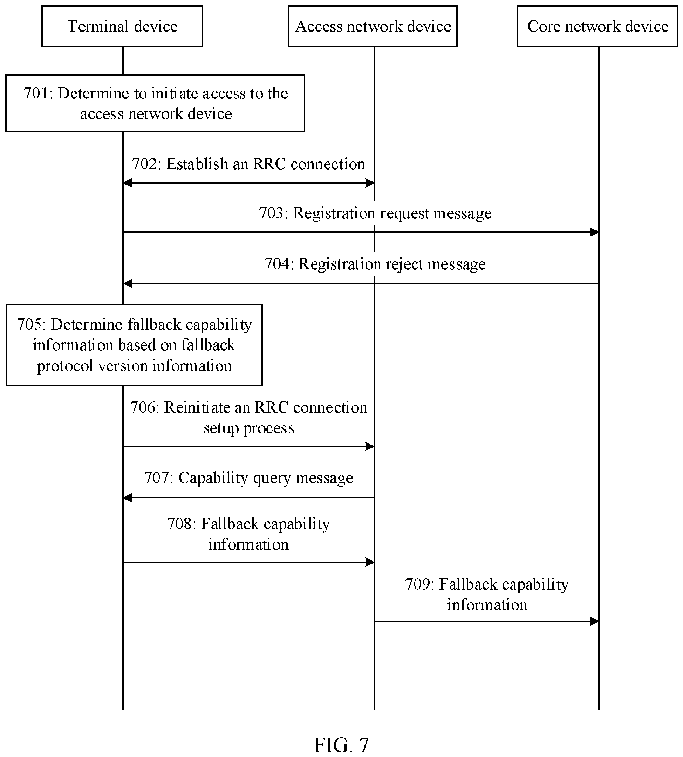

FIG. 7 is a schematic flowchart corresponding to a communication method according to Implementation 5 of this application. As shown in FIG. 7, the method may include:
Step 701: A terminal device determines, based on a service requirement, to initiate access to an access network device, to establish an RRC connection to the access network device.

Step 702: The terminal device establishes an RRC connection to the access network device.

For example, the terminal device may send an RRC connection setup request message to the access network device. The access network device receives the RRC connection setup request message from the terminal device, and sends an RRC connection setup message to the terminal device. After receiving the RRC connection setup message, the terminal device may send an RRC connection setup complete message to the access network device.

Step 703: The terminal device sends a registration request message to a core network device by using the access network device, to request to register with the core network device.

Step 704: The core network device sends a registration reject message to the terminal device, and specifies fallback protocol version information in the registration reject message.

For example, the core network device may determine, based on a specific reason, to reject the registration request from the terminal device. For example, the core network device may reject the registration request from the terminal device based on a reason such as a failure in decoding an ASN.1 information element of the terminal device or a failure in parsing network layer capability information of the terminal device, and send a registration reject message.

Step 705: After receiving the registration reject message, the terminal device determines fallback capability information of the terminal device based on fallback protocol version information provided by the core network device.

Step 706: The terminal device reinitiates an RRC connection setup process.

Step 707: The access network device sends a capability query message to the terminal device.

Step 708: The terminal device reports, in a capability reporting message, fallback capability information determined by the terminal device.

It should be noted that step 707 is an optional step, that is, after receiving the capability query message, the terminal device may report the fallback capability information determined by the terminal device. Alternatively, the terminal device may actively report the fallback capability information determined by the terminal device.

Step 709: The access network device receives and stores the fallback capability information of the terminal device, and sends the fallback capability information of the terminal device to the core network device. Correspondingly, the core network device may receive and store the fallback capability information of the terminal device. In this way, subsequently, the terminal device can successfully register with the core network device.

### Implementation 6

Implementation 4 and Implementation 5 describe a case in which a terminal device performs a capability fallback. To avoid an unnecessary capability fallback operation performed by the terminal device when a similar problem occurs in a subsequent moving process, the terminal device may determine, based on a specific network topology, whether to continue to use previous fallback capability information to perform related access or communication, or perform related access or communication by using actual capability information of the terminal device.

Based on this, a network capability area is introduced in this implementation of this application. For related content, refer to the description in Implementation 1. It should be noted that solutions of the network capability area in this implementation of this application may be implemented in combination with Implementation 1, or may be separately implemented. In Implementation 6, a possible implementation procedure is described for the network capability area.

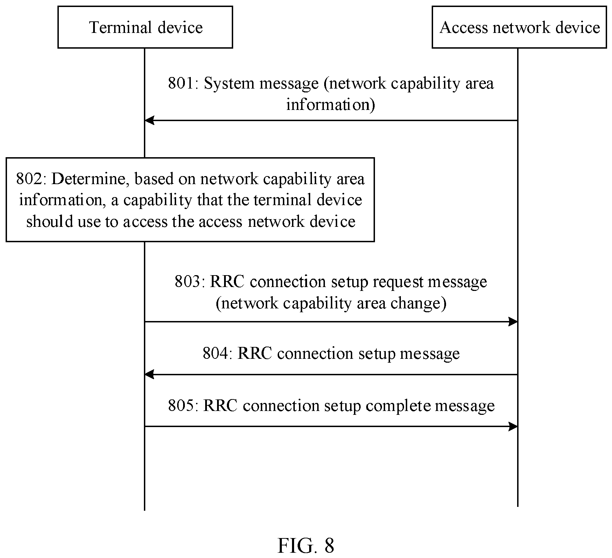

FIG. 8 is a schematic flowchart corresponding to a communication method according to Implementation 6 of this application. As shown in FIG. 8, the method may include:
Step 801: An access network device broadcasts network capability area information of the access network device in a system message.

Step 802: A terminal device determines, based on received network capability area information, a capability that the terminal device should use to access the access network device.

For example, if the terminal device determines that network capability area information of a current access network device is the same as network capability area information previously stored in the terminal device, or is the same as network capability area information of a previously accessed access network device, the terminal device may determine to continue to use previous fallback capability information to access a network, or report the fallback capability information to the current access network device. If the terminal device determines that the network capability area information broadcasted by the access network device changes, the terminal device may determine that the network needs to be re-accessed, and then step 803 to step 805 are performed.

Step 803: The terminal device sends an RRC connection setup request message to the access network device.

For example, the RRC connection setup request message may carry an access reason that the network capability area changes. In addition, the RRC connection setup request message may also carry network capability area information that is stored last time by the terminal device.

Step 804: The access network device sends an RRC connection setup message to the terminal device.

Step 805: The terminal device sends an RRC connection setup complete message to the access network device.

Optionally, the RRC connection setup complete message carries the network capability area information that is stored last time by the terminal device. Herein, if the RRC connection setup request message carries the network capability area information that is stored last time by the terminal device, the RRC connection setup complete message may no longer carry it.

After step 805, the terminal device may further perform a subsequent related procedure, such as reporting actual capability information of the terminal device to the access network device, and details are not described again.

### Implementation 7

In Implementation 7, a possible procedure is described based on Implementation 3.

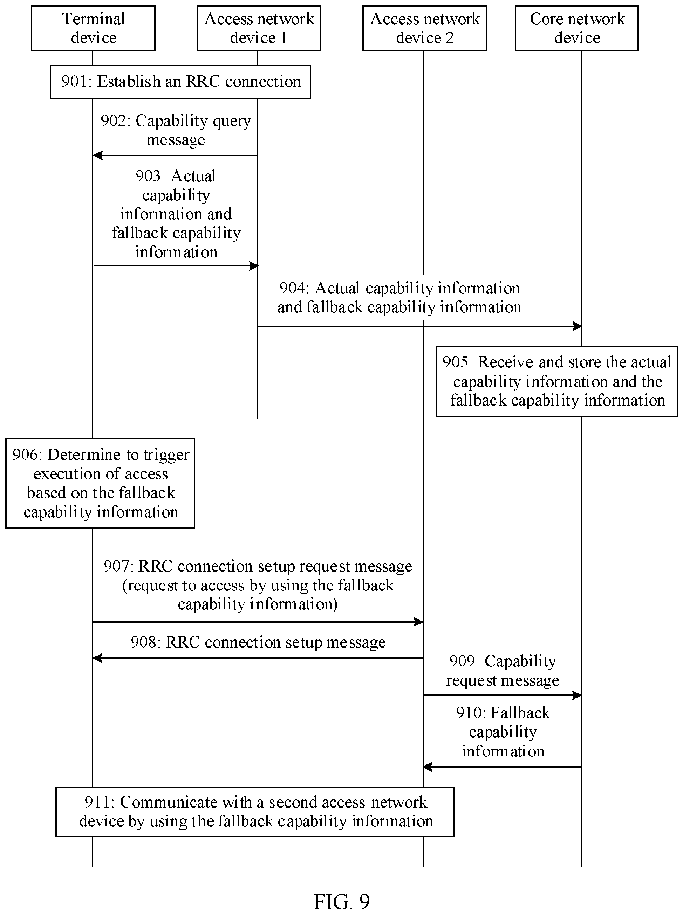

FIG. 9 is a schematic flowchart corresponding to a communication method according to Implementation 7 of this application. As shown in FIG. 9, the method may include:
Step 901: A terminal device establishes an RRC connection to an access network device 1.

Step 902: The access network device 1 sends a capability query message to the terminal device.

Step 903: The terminal device reports, in capability reporting, fallback capability information (including access layer capability information and/or network layer capability information) based on a fallback protocol version and actual capability information.

In this implementation, an example in which the fallback protocol version is a preset protocol version is used for description.

Step 904: The access network device 1 receives and stores the fallback capability information and the actual capability information of the terminal device, and sends the fallback capability information and the actual capability information of the terminal device to a core network device.

Step 905: The core network device receives and stores the fallback capability information and the actual capability information of the terminal device.

Step 906: The terminal device needs to access a new access network device (for example, an access network device 2), but communication is abnormal, so that the terminal device can determine to trigger execution of access based on the fallback capability information.

Step 907: The terminal device initiates an RRC connection setup request message to the access network device 2, and indicates, in the RRC connection setup request message, that the terminal device requests to access the access network device 2 by using the fallback capability information.

Step 908: The access network device 2 sends an RRC connection setup message to the terminal device.

Step 909: The access network device 2 sends a capability request message of the terminal device to the core network device, to request the fallback capability information of the terminal device.

Step 910: The core network device sends the fallback capability information of the terminal device to the access network device 2.

Step 911: The terminal device communicates with the access network device 2 by using the fallback capability information.

It should be noted that in the foregoing step procedure, if the access network device 2 successfully obtains the fallback capability information of the terminal device from a core network, the access network device 2 may no longer trigger a new capability query process to query the fallback capability information of the terminal device. If the access network device 2 does not obtain the fallback capability information of the terminal device from the core network, the access network device 2 may trigger a new capability query process to query the fallback capability information of the terminal device. For example, the access network device 2 may send a capability query message to the terminal device. Optionally, the capability query message may include indication information for querying the fallback capability information. Therefore, after receiving the capability query message, the terminal device may send the fallback capability information to the access network device 2.

For Implementation 1 to Implementation 7, the following should be noted:
(1) Step numbers of the flowcharts described in Implementation 1 to Implementation 7 are merely examples of performing the procedure, and do not constitute a limitation on a sequence of performing the steps. In implementations of this application, there is no strict execution sequence among steps that do not have a time sequence dependency on each other. In addition, not all steps indicated in each flowchart are steps that must be performed, and some steps may be added or deleted based on each flowchart according to an actual requirement.
(2) The foregoing focuses on describing differences between different implementations in Implementation 1 to Implementation 3 and differences between different implementations in Implementation 4 to Implementation 7, and for other content different from the differences, references may be made to each other in Implementation 1 to Implementation 7.
(3) Implementation 1 to Implementation 7 use some messages in a 5G communication system. However, in specific implementation, different messages or message names may be used, which is not limited in implementations of this application.

The foregoing mainly describes the solutions provided in the implementations of this application from a perspective of device interaction. It may be understood that, to implement the foregoing functions, the access network device, the core network device, or the terminal device may include a hardware structure and/or a software module correspondingly for performing each function. A person skilled in the art should be easily aware that, in combination with the examples described in implementations disclosed in this specification, units, algorithms, and steps may be implemented by hardware or a combination of hardware and computer software in implementations of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this implementation of this application, the network device, the core network device, or the terminal device may be divided into functional units based on the foregoing method example. For example, each functional unit may be divided corresponding to each function, or two or more functions may be integrated into one unit. The integrated unit may be implemented in a form of hardware, or may be implemented in a form of a software functional unit.

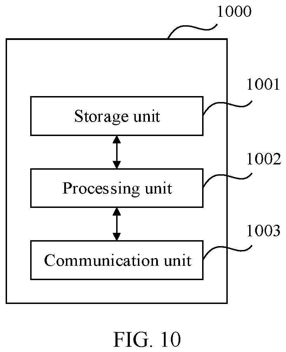

In a case in which an integrated unit is used, FIG. 10 shows a possible exemplary block diagram of an apparatus according to an implementation of this application. As shown in FIG. 10, an apparatus 1000 may include a processing unit 1002 and a communication unit 1003. The processing unit 1002 is configured to control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.

The apparatus 1000 may be the terminal device in the foregoing implementation, or may be a chip disposed in the terminal device. The processing unit 1002 may support the apparatus 1000 in performing actions of the terminal device in the foregoing method examples. Alternatively, the processing unit 1002 mainly performs an internal action of the terminal device in the method example, and the communication unit 1003 may support the communication between the apparatus 1000 and another device.

Specifically, in an implementation, the communication unit 1003 is configured to: receive indication information from a first access network device, where the indication information is used to indicate to fall back a capability of the terminal device to a first protocol version; and communicate, based on the indication information, with the first access network device by using first capability information, where a protocol version corresponding to the first capability information is lower than or equal to the first protocol version.

In a possible design, the communication unit 1003 is further configured to send the first capability information to the first access network device.

In a possible design, the indication information is carried in an RRC connection setup reject message or an RRC connection release message.

In a possible design, the communication unit 1003 is further configured to: receive a fallback cause value from the first access network device, where the fallback cause value is used to indicate at least one of the following: A first message sent by the terminal device cannot be identified; one or more information elements in the first message cannot be identified; second capability information sent by the terminal device fails to be parsed; the capability of the terminal device is excessively large; an ASN.1 information element fails to be parsed; and an ASN.1 extended information element fails to be parsed.

In a possible design, the fallback cause value and the indication information are carried in a same message.

In a possible design, the processing unit 1002 is configured to determine that a network capability area to which the first access network device belongs changes, where the network capability area includes at least one access network device, and the at least one access network device has a same capability; and the communication unit 1003 is further configured to send an RRC connection setup request message to the first access network device.

In a possible design, the RRC connection setup request message includes a cause value, and the cause value is used to indicate that a network capability area changes.

In a possible design, the RRC connection setup request message includes an identifier of a network capability area before changing.

In a possible design, the communication unit 1003 is further configured to communicate with the first access network device by using actual capability information of the terminal device.

In a possible design, the communication unit 1003 is further configured to send the actual capability information of the terminal device to the first access network device.

In a possible design, the communication unit 1003 is further configured to send an RRC connection setup request message to a second access network device, where a network capability area to which the second access network device belongs is different from a network capability area to which the first access network device belongs, the network capability area includes at least one access network device, and the at least one access network device has a same capability.

In a possible design, the RRC connection setup request message includes a cause value, and the cause value is used to indicate that a network capability area changes.

In a possible design, the RRC connection setup request message includes an identifier of the network capability area to which the first access network device belongs.

In a possible design, the communication unit 1003 is further configured to communicate with the second access network device by using the actual capability information of the terminal device.

In a possible design, the communication unit 1003 is further configured to send the actual capability information of the terminal device to the second access network device.

In a possible design, the communication unit 1003 is further configured to communicate with a second access network device by using the first capability information, where the network capability area to which the second access network device belongs is the same as a network capability area to which the first access network device belongs, the network capability area includes at least one access network device, and the at least one access network device has a same capability.

In a possible design, the communication unit 1003 is further configured to send the first capability information to the second access network device.

In a possible design, the communication unit 1003 is further configured to receive, from the first access network device, an identifier of the network capability area to which the first access network device belongs; and/or receive, from the second access network device, an identifier of the network capability area to which the second access network device belongs.

The apparatus 1000 may be the access network device in the foregoing implementation, or may further be a chip disposed in the access network device. The processing unit 1002 may support the apparatus 1000 in performing actions of the access network device in the foregoing method examples. Alternatively, the processing unit 1002 mainly performs an internal action of the access network device in the method example, and the communication unit 1003 may support the communication between the apparatus 1000 and another device.

Specifically, in an implementation, the communication unit 1003 is configured to: send indication information to a terminal device, where the indication information is used to indicate to fall back a capability of the terminal device to a first protocol version; and receive first capability information of the terminal device, where a protocol version corresponding to the first capability information is lower than or equal to the first protocol version.

In a possible design, the processing unit 1002 is configured to determine that communication with the terminal device is abnormal.

In a possible design, the communication unit 1003 is further configured to receive a first message from the terminal device, and the processing unit 1002 is further configured to determine that the first message cannot be identified or determine that the first message fails to be parsed. Alternatively, the communication unit 1003 is further configured to receive second capability information from the terminal device, and the processing unit 1002 is further configured to determine that the second capability information fails to be parsed.

In a possible design, the first message includes at least one of the following: an RRC connection setup request message, an RRC connection setup resume request message, and an RRC connection reestablishment request message.

In a possible design, the indication information is carried in an RRC connection setup reject message or an RRC connection release message.

In a possible design, the communication unit 1003 is further configured to send a fallback cause value to the terminal device, where the fallback cause value is used to indicate at least one of the following: The first message sent by the terminal device cannot be identified; one or more information elements in the first message cannot be identified; the second capability information sent by the terminal device fails to be parsed; the capability of the terminal device is excessively large; an ASN.1 information element fails to be parsed; and an ASN.1 extended information element fails to be parsed.

In a possible design, the fallback cause value and the indication information are carried in a same message.

In a possible design, the communication unit 1003 is further configured to send an identifier of a network capability area to which a first access network device belongs to the terminal device, where the network capability area includes at least one access network device, the at least one access network device has a same capability, and the at least one access network device includes the first access network device.

In a possible design, the communication unit 1003 is further configured to receive an identifier of a network capability area to which a first access network device belongs from a core network device, where the network capability area includes at least one access network device, the at least one access network device has a same capability, and the at least one access network device includes the first access network device.

The apparatus 1000 may be the core network device in the foregoing implementation, or may further be a chip disposed in the core network device. The processing unit 1002 may support the apparatus 1000 in performing actions of the core network device in the foregoing method examples. Alternatively, the processing unit 1002 mainly performs an internal action of the core network device in the method example, and the communication unit 1003 may support the communication between the apparatus 1000 and another device.

It should be understood that unit division in the foregoing apparatus is merely division of a logical function. In actual implementation, all or a part of units may be integrated into a physical entity, or may be physically separated. In addition, units in the apparatus may all be implemented in a form of software invoked by using a processing element, or may all be implemented in a form of hardware. Alternatively, some units may be implemented in a form of software invoked by using a processing element, and some units are implemented in a form of hardware. For example, each unit may be a separately disposed processing element, or may be integrated into a chip of the apparatus for implementation, or may be stored in a memory in a form of a program, and a processing element of the apparatus invokes and executes a function of the unit. In addition, all or a part of these units may be integrated together, or may be implemented independently. The processing element described herein may also be a processor, and may be an integrated circuit that has a signal processing capability. In an implementation process, each operation in the foregoing method or each of the foregoing units may be implemented by using an integrated logic circuit of hardware in a processor element or implemented in a form of software invoked by using a processing element.

In an example, a unit in any of the foregoing apparatuses may be one or more integrated circuits configured to implement the foregoing methods, for example, one or more application specific integrated circuits (ASIC), one or more digital signal processors (DSP), one or more field programmable gate arrays (FPGA), or a combination of at least two in these integrated circuit forms. For another example, when a unit in the apparatus may be implemented in a form of a program scheduled by using a processing element, the processing element may be a processor, such as a general-purpose central processing unit (CPU), or another processor that may invoke a program. For another example, the units may be integrated together and implemented in a form of a system-on-a-chip (SOC).

The foregoing unit for receiving is an interface circuit of the apparatus, and is configured to receive a signal from another apparatus. For example, when the apparatus is implemented in a chip manner, the receiving unit is an interface circuit that is used by the chip to receive a signal from another chip or apparatus. The foregoing unit for sending is an interface circuit of the apparatus, and is configured to send a signal to another apparatus. For example, when the apparatus is implemented in a chip manner, the sending unit is an interface circuit that is used by the chip to send a signal to another chip or apparatus.

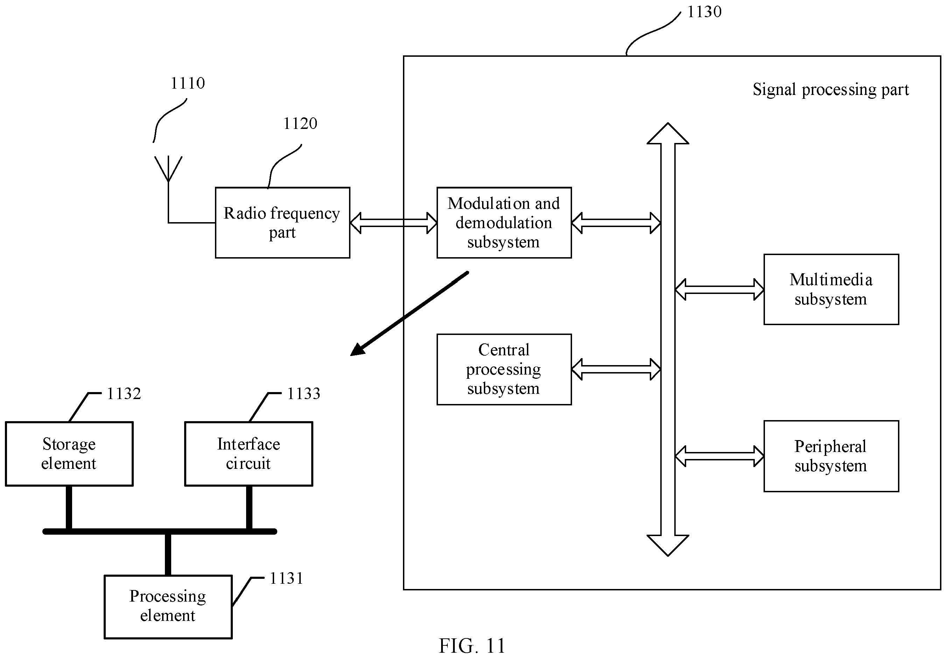

FIG. 11 is a schematic diagram of a structure of a terminal device according to an implementation of this application. The terminal device may be the terminal device in the foregoing implementation, and is configured to implement an operation of the terminal device in the foregoing implementation. As shown in FIG. 11, the terminal device includes an antenna 1110, a radio frequency part 1120, and a signal processing part 1130. The antenna 1110 is connected to the radio frequency part 1120. In a downlink direction, the radio frequency part 1120 receives, by using the antenna 1110, information sent by a network device, and sends the information sent by the network device to the signal processing part 1130 for processing. In an uplink direction, the signal processing part 1130 processes information of the terminal device, and sends the information to the radio frequency part 1120. After processing the information of the terminal device, the radio frequency part 1120 sends the information of the terminal device to the network device by using the antenna 1110.

The signal processing part 1130 may include a modulation and demodulation subsystem, configured to implement processing on each communication protocol layer of data; may further include a central processing subsystem, configured to implement processing on an operating system and an application layer of the terminal device; and in addition, may further include another subsystem, such as a multimedia subsystem and a peripheral subsystem, where the multimedia subsystem is configured to control a camera of the terminal device, a screen display, and the like, and the peripheral subsystem is configured to implement connection to another device. The modulation and demodulation subsystem may be a chip that is separately disposed.

The modulation and demodulation subsystem may include one or more processing elements 1131, for example, include a main control CPU and another integrated circuit. In addition, the modulation and demodulation subsystem may further include a storage element 1132 and an interface circuit 1133. The storage element 1132 is configured to store data and a program. However, a program used to perform the method performed by the terminal device in the foregoing method may not be stored in the storage element 1132, but is stored in a memory outside the modulation and demodulation subsystem, and is loaded by the modulation and demodulation subsystem for use. The interface circuit 1133 is configured to communicate with another subsystem.

The modulation and demodulation subsystem may be implemented by using a chip. The chip includes at least one processing element and an interface circuit. The processing element is configured to perform steps of any method performed by the foregoing terminal device, and the interface circuit is configured to communicate with another apparatus. In an implementation, units in the terminal device for implementing the steps in the foregoing methods may be implemented in a form of scheduling a program by the processing element. For example, the apparatus used in the terminal device includes a processing element and a storage element. The processing element invokes a program stored in the storage element, to perform the method performed by the terminal device in the foregoing method implementations. The storage element may be a storage element on a same chip as the processing element, that is, an on-chip storage element.

In another implementation, the program used to perform the method performed by the terminal device in the foregoing method may be on a storage element that is on a different chip from the processing element, that is, an off-chip storage element. In this case, the processing element invokes the program from the off-chip storage element or loads the program to the on-chip storage element, so as to invoke and perform the method performed by the terminal device in the foregoing method implementation.

In another implementation, units for implementing steps in the foregoing method by the terminal device may be configured as one or more processing elements, and the processing elements are disposed on the modulation and demodulation subsystem. The processing elements herein may be integrated circuits, such as one or more ASICs, one or more DSPs, one or more FPGAs, or a combination of these types of integrated circuits. The integrated circuits may be integrated together to form a chip.

The units for implementing the steps in the foregoing method by the terminal device may be integrated and implemented in a form of an SOC. The SOC chip is configured to implement the foregoing method. At least one processing element and storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by invoking a program by the processing element, and functions of some units may be implemented by the integrated circuit.

It can be learned that the foregoing apparatus used for the terminal device may include at least one processing element and an interface circuit, and the at least one processing element is configured to perform the method performed by any terminal device provided in the foregoing method implementations. The processing element may perform some or all steps performed by the terminal device in a first manner, to be specific, by invoking the program stored in the storage element; or may perform some or all steps performed by the terminal device in a second manner, to be specific, by using a hardware integrated logic circuit in the processing element in combination with instructions; or may certainly perform, by combining the first manner and the second manner, some or all steps performed by the terminal device.

The processing element herein is the same as that in the foregoing description, and may be implemented by using a processor. A function of the processing element may be the same as a function of the processing unit described in FIG. 10. For example, the processing element herein may be a general-purpose processor, for example, a CPU, or may be one or more integrated circuits, for example, one or more ASICs, one or more microprocessors DSPs, one or more FPGAs, or a combination of at least two of these types of integrated circuits, configured to implement the foregoing methods. The storage element may be implemented by using a memory, and a function of the storage element may be the same as that of the storage unit described in FIG. 10. The storage element may be one memory, or may be a general term of a plurality of storage elements.

The terminal device shown in FIG. 11 can implement processes related to the terminal device in the foregoing method implementations. Operations and/or functions of modules in the terminal device shown in FIG. 11 are respectively used to implement corresponding procedures in the foregoing method implementations. For details, refer to the descriptions in the foregoing method implementations. To avoid repetition, detailed descriptions are properly omitted herein.

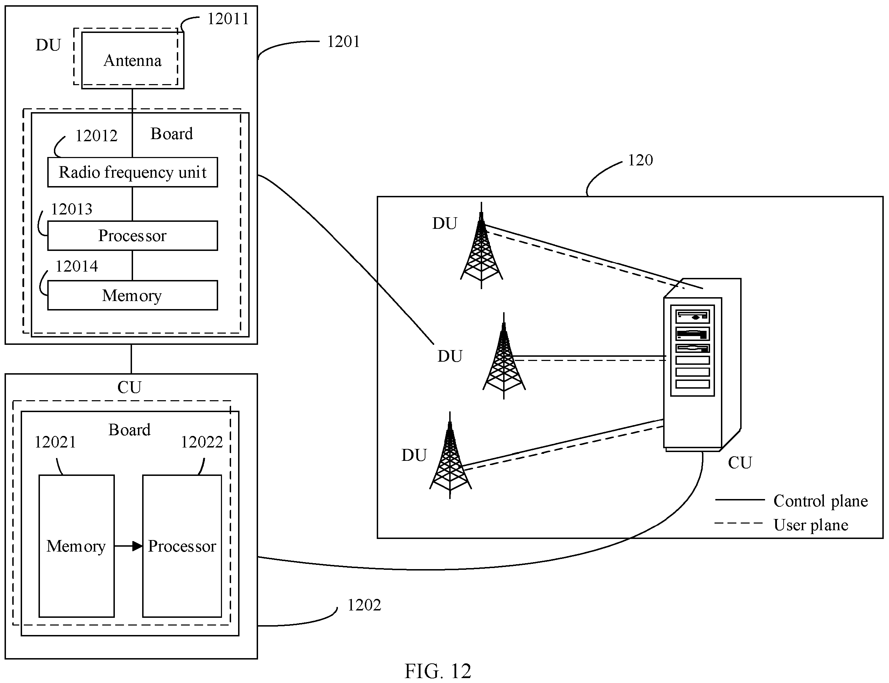

FIG. 12 is a schematic diagram of a structure of an access network device according to an implementation of this application. The access network device (or a base station) may be applied to the system architecture shown in FIG. 1 to perform a function of the access network device in the foregoing method implementations. An access network device 120 may include one or more DUs 1201 and one or more CUs 1202. The DU 1201 may include at least one antenna 12011, at least one radio frequency unit 12012, at least one processor 12013, and at least one memory 12014. The DU 1201 is mainly configured to receive and send a radio frequency signal, convert a radio frequency signal and a baseband signal, and process some basebands. The CU 1202 may include at least one processor 12022 and at least one memory 12021.

The CU 1202 is mainly configured to perform baseband processing, control a network access device, and the like. The DU 1201 and the CU 1202 may be physically disposed together, or may be physically disposed separately, that is, a distributed base station. The CU 1202 is a control center of the access network device, may be referred to as a processing unit, and is mainly configured to complete a baseband processing function. For example, the CU 1202 may be configured to control the access network device to perform an operation procedure related to the access network device in the foregoing method implementations.

In addition, optionally, the access network device 120 may include one or more radio frequency units, one or more DUs, and one or more CUs. The DU may include at least one processor 12013 and at least one memory 12014, the radio frequency unit may include at least one antenna 12011 and at least one radio frequency unit 12012, and the CU may include at least one processor 12022 and at least one memory 12021.

In an example, the CU 1202 may be formed by one or more boards, and a plurality of boards may jointly support a radio access network (such as a 5G network) of a single access standard, or may separately support radio access networks of different access standards (such as an LTE network, a 5G network, or another network). The memory 12021 and the processor 12022 may serve one or more boards. In other words, a memory and a processor may be deployed on each board. Alternatively, a plurality of boards may share a same memory and a same processor. In addition, a necessary circuit may be further disposed on each board. The DU 1201 may be formed by one or more boards, and a plurality of boards may jointly support a radio access network (such as a 5G network) of a single access standard, or may separately support radio access networks of different access standards (such as an LTE network, a 5G network, or another network). The memory 12014 and the processor 12013 may serve one or more boards. In other words, a memory and a processor may be deployed on each board. Alternatively, a plurality of boards may share a same memory and a same processor. In addition, a necessary circuit may be further disposed on each board.

The access network device shown in FIG. 12 can implement processes related to the access network device in the foregoing method implementations. Operations and/or functions of modules in the access network device shown in FIG. 12 are respectively used to implement corresponding procedures in the foregoing method implementations. For details, refer to the descriptions in the foregoing method implementations. To avoid repetition, detailed descriptions are properly omitted herein.

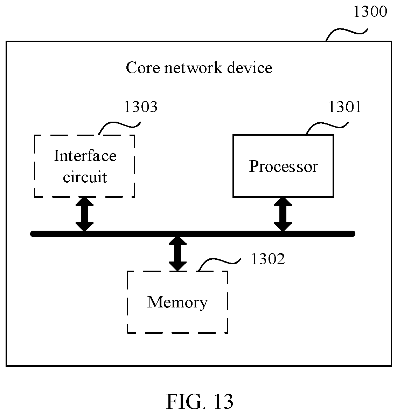

FIG. 13 is a schematic diagram of a structure of a core network device according to an implementation of this application. The core network device may be an AMF network element and/or another possible network element (for example, an SMF network element), and is configured to implement an operation of the core network device in the foregoing implementations.

As shown in FIG. 13, a core network device 1300 may include a processor 1301, a memory 1302, and an interface circuit 1303. The processor 1301 may be configured to process a communication protocol and communication data, and control a communication apparatus. The memory 1302 may be configured to store a program and data, and the processor 1301 may perform, based on the program, the method performed by the core network device in the implementations of this application. The interface circuit 1303 may be used for the core network device 1300 to communicate with another device, where the communication may be wired communication or wireless communication, and the interface circuit may be, for example, a service-oriented communication interface.

The memory 1302 may alternatively be externally connected to the core network device 1300. In this case, the core network device 1300 may include an interface circuit 1303 and a processor 1301. The interface circuit 1303 may alternatively be externally connected to the core network device 1300. In this case, the core network device 1300 may include a memory 1302 and a processor 1301. When both the interface circuit 1303 and the memory 1302 are externally connected to the core network device 1300, the core network device 1300 may include the processor 1301.

The core network device shown in FIG. 13 can implement processes related to the core network device in the foregoing method implementations. Operations and/or functions of modules in the core network device shown in FIG. 13 are respectively used to implement corresponding procedures in the foregoing method implementations. For details, refer to the descriptions in the foregoing method implementations. To avoid repetition, detailed descriptions are properly omitted herein.

The terms "system" and "network" may be used interchangeably in implementations of this application. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise stated, ordinal numbers such as "first" and "second" in implementations of this application are used to distinguish between a plurality of objects, but are not intended to limit an order, a time sequence, priorities, or importance of the plurality of objects.

A person skilled in the art should understand that the implementations of this application may be provided as a method, a system, or a computer program product. Therefore, this application may use a form of a hardware-only implementation, a software-only implementation, or an implementation with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

The scope of protection is defined by the appended claims.

## Claims

1. A communication method, wherein the method is applicable to a terminal device or a chip in the terminal device, and the method comprises:
receiving (302) indication information from a first access network device, wherein the indication information is used to indicate to fall back a capability of the terminal device to a first protocol version; and
communicating (303), based on the indication information, with the first access network device by using first capability information, wherein a protocol version corresponding to the first capability information is lower than or equal to the first protocol version;
wherein the method is **characterised in that** it further comprises:
determining that a network capability area to which the first access network device belongs changes, wherein the network capability area comprises at least one access network device, and each access network device in the network capability area has the same capability; and
sending an RRC connection setup request message to the first access network device;
wherein the RRC connection setup request message comprises a cause value, and the cause value is used to indicate that a network capability area changes;
or
**in that** the method further comprises:
sending an RRC connection setup request message to a second access network device, wherein a network capability area to which the second access network device belongs is different from a network capability area to which the first access network device belongs, the network capability area comprises at least one access network device, and each access network device in the network capability area has the same capability;
wherein the RRC connection setup request message comprises a cause value, and the cause value is used to indicate that a network capability area changes.

2. The method according to claim 1, wherein before the communicating, based on the indication information, with the first access network device by using first capability information, the method further comprises:
sending the first capability information to the first access network device.

3. The method according to claim 1 or 2, wherein the indication information is carried in a radio resource control, RRC, connection setup reject message or an RRC connection release message.

4. The method according to claim 3, wherein the method further comprises:
receiving a fallback cause value from the access network device, wherein the fallback cause value is used to indicate at least one of the following:
a first message sent by the terminal device cannot be identified;
one or more information elements in the first message cannot be identified;
second capability information sent by the terminal device fails to be parsed;
the capability of the terminal device is excessively large;
an abstract syntax notation one ASN. 1 information element fails to be parsed; and
an ASN. 1 extended information element fails to be parsed.

5. The method according to claim 4, wherein the fallback cause value and the indication information are carried in a same message.

6. The method according to any one of claims 1 to 5, wherein when the method comprises the step of determining that a network capability area to which the first access network device belongs changes, the RRC connection setup request message comprises an identifier of a network capability area before changing.

7. The method according to any one of claims 1 to 5, wherein when the method comprises the step of sending an RRC connection setup request message to a second access network device, the RRC connection setup request message comprises an identifier of the network capability area to which the first access network device belongs.

8. A communication apparatus, comprising a module configured to perform the method according to any one of claims 1 to 7.

9. A computer-readable storage medium, wherein the storage medium stores a computer program or instructions, and when the computer program or the instructions is/are executed by a communication apparatus, the method according to any one of claims 1 to 7 is performed.

## Patentansprüche

1. Kommunikationsverfahren, wobei das Verfahren auf eine Endgerätevorrichtung oder einen Chip in der Endgerätevorrichtung anwendbar ist, und das Verfahren umfasst:
Empfangen (302) von Anzeigeinformationen von einer ersten Zugangsnetzwerkvorrichtung, wobei die Anzeigeinformationen verwendet werden, um anzuzeigen, dass eine Fähigkeit der Endgerätevorrichtung auf eine erste Protokollversion zurückfallen soll; und
Kommunizieren (303), basierend auf den Anzeigeinformationen, mit der ersten Zugangsnetzwerkvorrichtung durch Verwenden von ersten Fähigkeitsinformationen, wobei eine Protokollversion, die den ersten Fähigkeitsinformationen entspricht, niedriger als oder gleich der ersten Protokollversion ist;
wobei das Verfahren **dadurch gekennzeichnet ist, dass** es ferner umfasst:
Bestimmen, dass sich ein Netzwerkfähigkeitsbereich, zu dem die erste Zugangsnetzwerkvorrichtung gehört, ändert, wobei der Netzwerkfähigkeitsbereich mindestens eine Zugangsnetzwerkvorrichtung umfasst, und jede Zugangsnetzwerkvorrichtung in dem Netzwerkfähigkeitsbereich die gleiche Fähigkeit aufweist; und
Senden einer RRC-Verbindungsaufbauanforderungsnachricht an die erste Zugangsnetzwerkvorrichtung;
wobei die RRC-Verbindungsaufbauanforderungsnachricht einen Ursachenwert umfasst, und der Ursachenwert verwendet wird, um anzuzeigen, dass sich ein Netzwerkfähigkeitsbereich ändert;
oder
**dadurch, dass** das Verfahren ferner umfasst:
Senden einer RRC-Verbindungsaufbauanforderungsnachricht an eine zweite Zugangsnetzwerkvorrichtung, wobei ein Netzwerkfähigkeitsbereich, zu dem die zweite Zugangsnetzwerkvorrichtung gehört, sich von einem Netzwerkfähigkeitsbereich, zu dem die erste Zugangsnetzwerkvorrichtung gehört, unterscheidet, wobei der Netzwerkfähigkeitsbereich mindestens eine Zugangsnetzwerkvorrichtung umfasst, und jede Zugangsnetzwerkvorrichtung in dem Netzwerkfähigkeitsbereich die gleiche Fähigkeit aufweist;
wobei die RRC-Verbindungsaufbauanforderungsnachricht einen Ursachenwert umfasst, und der Ursachenwert verwendet wird, um anzuzeigen, dass sich ein Netzwerkfähigkeitsbereich ändert.

2. Verfahren nach Anspruch 1, wobei vor dem Kommunizieren, basierend auf den Anzeigeinformationen, mit der ersten Zugangsnetzwerkvorrichtung durch Verwenden von ersten Fähigkeitsinformationen, das Verfahren ferner umfasst:
Senden der ersten Fähigkeitsinformationen an die erste Zugangsnetzwerkvorrichtung.

3. Verfahren nach Anspruch 1 oder 2, wobei die Anzeigeinformationen in einer Funkressourcensteuerung(RRC)-Verbindungsaufbauablehnungsnachricht oder einer RRC-Verbindungsfreigabenachricht getragen werden.

4. Verfahren nach Anspruch 3, wobei das Verfahren ferner umfasst:
Empfangen eines Rückfallursachenwerts von der Zugangsnetzwerkvorrichtung, wobei der Rückfallursachenwert verwendet wird, um mindestens eines der Folgenden anzuzeigen:
eine erste Nachricht, die durch die Endgerätevorrichtung gesendet wird, kann nicht identifiziert werden;
ein oder mehrere Informationselemente in der ersten Nachricht können nicht identifiziert werden;
zweite Fähigkeitsinformationen, die durch die Endgerätevorrichtung gesendet werden, können nicht analysiert werden;
die Fähigkeit der Endgerätevorrichtung ist übermäßig groß;
eine abstrakte Syntaxnotation eines ASN.1-Informationselements kann nicht analysiert werden; und
ein erweitertes ASN.1-Informationselement kann nicht analysiert werden.

5. Verfahren nach Anspruch 4, wobei der Rückfallursachenwert und die Anzeigeinformationen in einer gleichen Nachricht getragen werden.

6. Verfahren nach einem der Ansprüche 1 bis 5, wobei, wenn das Verfahren den Schritt des Bestimmens umfasst, dass sich ein Netzwerkfähigkeitsbereich, zu dem die erste Zugangsnetzwerkvorrichtung gehört, ändert, die RRC-Verbindungsaufbauanforderungsnachricht eine Kennung eines Netzwerkfähigkeitsbereichs vor einem Ändern umfasst.

7. Verfahren nach einem der Ansprüche 1 bis 5, wobei, wenn das Verfahren den Schritt des Sendens einer RRC-Verbindungsaufbauanforderungsnachricht an eine zweite Zugangsnetzwerkvorrichtung umfasst, die RRC-Verbindungsaufbauanforderungsnachricht eine Kennung des Netzwerkfähigkeitsbereichs, zu dem die erste Zugangsnetzwerkvorrichtung gehört, umfasst.

8. Kommunikationseinrichtung, die ein Modul umfasst, das konfiguriert ist, um das Verfahren nach einem der Ansprüche 1 bis 7 durchzuführen.

9. Computerlesbares Speichermedium, wobei das Speichermedium ein Computerprogramm oder Anweisungen speichert, und wenn das Computerprogramm oder die Anweisungen durch eine Kommunikationseinrichtung ausgeführt wird/werden, das Verfahren nach einem der Ansprüche 1 bis 7 durchgeführt wird.

## Revendications

1. Procédé de communication, dans lequel le procédé est applicable à un dispositif terminal ou à une puce dans le dispositif terminal, et le procédé comprend :
la réception (302) d'informations d'indication depuis un premier dispositif de réseau d'accès, dans lequel les informations d'indication sont utilisées pour indiquer de replier une capacité du dispositif terminal à une première version de protocole ; et
la communication (303), sur la base des informations d'indication, avec le premier dispositif de réseau d'accès en utilisant des premières informations de capacité, dans lequel une version de protocole correspondant aux premières informations de capacité est inférieure ou égale à la première version de protocole ;
dans lequel le procédé est **caractérisé en ce qu'**il comprend en outre :
la détermination qu'une zone de capacité de réseau à laquelle appartient le premier dispositif de réseau d'accès change, dans lequel la zone de capacité de réseau comprend au moins un dispositif de réseau d'accès, et chaque dispositif de réseau d'accès dans la zone de capacité de réseau a la même capacité ; et
l'envoi d'un message de demande d'établissement de connexion RRC au premier dispositif de réseau d'accès ;
dans lequel le message de demande d'établissement de connexion RRC comprend une valeur de cause, et la valeur de cause est utilisée pour indiquer qu'une zone de capacité de réseau change ;
ou
**en ce que** le procédé comprend en outre :
l'envoi d'un message de demande d'établissement de connexion RRC à un second dispositif de réseau d'accès, dans lequel une zone de capacité de réseau à laquelle appartient le second dispositif de réseau d'accès est différente d'une zone de capacité de réseau à laquelle appartient le premier dispositif de réseau d'accès, la zone de capacité de réseau comprend au moins un dispositif de réseau d'accès, et chaque dispositif de réseau d'accès dans la zone de capacité de réseau a la même capacité ;
dans lequel le message de demande d'établissement de connexion RRC comprend une valeur de cause, et la valeur de cause est utilisée pour indiquer qu'une zone de capacité de réseau change.

2. Procédé selon la revendication 1, dans lequel, avant la communication, sur la base des informations d'indication, avec le premier dispositif de réseau d'accès en utilisant de premières informations de capacité, le procédé comprend en outre :
l'envoi des premières informations de capacité au premier dispositif de réseau d'accès.

3. Procédé selon la revendication 1 ou 2, dans lequel les informations d'indication sont transportées dans un message de refus d'établissement de connexion de commande de ressource radio, RRC, ou un message de libération de connexion RRC.

4. Procédé selon la revendication 3, dans lequel le procédé comprend en outre :
la réception d'une valeur de cause de repli à partir du dispositif de réseau d'accès,
dans lequel la valeur de cause de repli est utilisée pour indiquer au moins l'un des éléments suivants :
un premier message envoyé par le dispositif terminal ne peut pas être identifié ;
un ou plusieurs éléments d'information dans le premier message ne peuvent pas être identifiés ;
une seconde information de capacité envoyée par le dispositif terminal ne parvient pas à être analysée ;
la capacité du dispositif terminal est excessivement grande ;
une notation syntaxique abstraite un élément d'information ASN.1 n'est pas analysé ;
et
un élément d'information étendu ASN.1 ne parvient pas à être analysé.

5. Procédé selon la revendication 4, dans lequel la valeur de cause de repli et les informations d'indication sont transportées dans un même message.

6. Procédé selon l'une quelconque des revendications 1 à 5, dans lequel, lorsque le procédé comprend l'étape de détermination qu'une zone de capacité de réseau à laquelle appartient le premier dispositif de réseau d'accès change, le message de demande d'établissement de connexion RRC comprend un identifiant d'une zone de capacité de réseau avant de changer.

7. Procédé selon l'une quelconque des revendications 1 à 5, dans lequel, lorsque le procédé comprend l'étape d'envoi d'un message de demande d'établissement de connexion RRC à un second dispositif de réseau d'accès, le message de demande d'établissement de connexion RRC comprend un identifiant de la zone de capacité de réseau à laquelle appartient le premier dispositif de réseau d'accès.

8. Appareil de communications, comprenant un module configuré pour mettre en oeuvre le procédé selon l'une quelconque des revendications 1 à 7.

9. Support de stockage lisible par ordinateur, dans lequel le support de stockage stocke un programme informatique ou des instructions, et lorsque le programme informatique ou les instructions sont exécutés par un appareil de communications, le procédé selon l'une quelconque des revendications 1 à 7 est mis en oeuvre.
